# EUROPÄISCHE PATENTANMELDUNG

(11) **EP 4 844 165 A1**
(43) Veröffentlichungstag der Anmeldung: **25.11.2026**
(21) Anmeldenummer: 26159572.2
(22) Anmeldetag: 19.02.2026
(51) Int. Cl.: E05D 3/12

(54) **ZWANGSGESTEUERTES DOPPELGELENK-SCHARNIER FÜR EINE KLAPPBARE BORDWAND EINES NUTZFAHRZEUGES**

(30) Priorität: 22.05.2025 CH 5542025
(71) Anmelder: Lanz+Marti AG, 6210 Sursee (CH)
(72) Erfinder: Schmid, Pascal, 6210 Sursee (CH); Sigrist, Ronny, 6211 Buchs (CH)

(57) **Zusammenfassung**

Die Erfindung betrifft ein Doppelgelenk-Scharnier 1 zum vollständigen Abklappen einer Bordwand 22 eines Nutzfahrzeuges um etwa 180° ohne Kollision mit Reifen 19 oder Kotflügel 20, selbst bei maximal ausgenutzten Fahrzeugbreite. Das Doppelgelenk-Scharnier 1 weisst zwei Kurvengetriebe im Gelenkstück 25, welche an einem fahrgestellfesten Scharnierteil 3 und an einem bordwandfesten Scharnierteil 2 angelenkt ist. Die Kurvengetriebe bestehen jeweils aus mehreren Kurvenelementen und ermöglichen eine zwangsgesteuerte, sequenzielle Schwenkfolge. In einer ersten Phase ist ausschliesslich die fahrgestellnahe Drehachse 3 freigegeben, während die bordwandnahe Drehachse 13 blockiert bleibt. Nach etwa 90° erfolgt ein Wechsel der aktiven Achsen. Diese Kinematik gewährleistet einen sicheren, kontrollierten Bewegungsablauf ohne Funktionsstörungen auch bei widrigen Bedingungen. Die kompakte Plattenbauweise sowie integrierte, verschleissfeste Anschlagflächen im Scharnier ermöglichen eine montagefreundliche, robuste und bauraumoptimierte Lösung mit hoher Lebensdauer unter anspruchsvollen Einsatzbedingungen.

## Beschreibung

Die Erfindung betrifft ein Scharnier zum vertikalen Herunterklappen einer Bordwand eines Nutzfahrzeugs um etwa 180°, wobei an beiden Drehachsen jeweils ein Schwenken der Bordwand um etwa 90° ermöglicht ist. Erfindungsgemäss umfasst das Scharnier ein fahrgestellfestes Scharnierteil und ein an der Bordwand befestigtes Scharnierteil, die jeweils eine Drehachse aufweisen, sowie ein zwischen den Drehachsen angeordnetes, angelenktes Gelenkstück.

Bei schweren Nutzfahrzeugen, insbesondere solchen mit alternativen Antrieben, wird die gesetzlich zulässige maximale Fahrzeugbreite durch die seitlich angeordneten Reifen und Kotflügel vollständig ausgeschöpft. Aus diesem Grund muss das Bordwandscharnier, insbesonders bei der herkömmlichen eingelenkigen Ausführung, in geschlossener Stellung innerhalb dieser maximal zulässigen Breite angeordnet sein. Eine vollständige Schwenkbewegung der Bordwand um etwa 180° nach unten, wie sie für einen ungehinderten Zugang zur Ladefläche bei der Be- und Entladung wünschenswert wäre, ist mit solchen Scharnierlösungen jedoch konstruktiv nicht realisierbar. Ursache hierfür ist, dass die Bordwand beim Herunterklappen mit den Reifen oder Kotflügeln kollidieren würde, wodurch ein vollständiges vertikales Abklappen verhindert wird.

Bei bekannten Doppelgelenk-Scharnieren der eingangs genannten Art, wie beispielsweise aus CH 201150 A, FR 2571088 B1 und DE 4038729 A1 kann die Bordwand um etwa 180° nach unten geschwenkt werden und weist für beide Drehachsen jeweils Schwenkbegrenzungen von etwa 90° auf. Hierdurch kann eine Kollision der Bordwand mit Reifen und Kotflügeln verhindert werden. Beim Herunterund Hochklappen der Bordwand ist jedoch die aktive Drehachse nicht eindeutig definiert. Dies führt dazu, dass bei Verschmutzungen des Scharniers oder bei einseitiger Belastung, wie sie üblicherweise auftritt, da die Verriegelung der Bordwände seitlich an diesen angeordnet ist und somit das Anheben der Bordwand oft seitlich erfolgt, Funktionsstörungen auftreten können. Insbesondere kann es in solchen Situationen zu einer Kollision der Bordwand mit dem Aussenrahmen des Fahrzeugs kommen, etwa durch Zurückfallen der Bordwand beim Öffnen mit zu früher Aktivierung der bordwandnahen Drehachse oder beim Schliessen durch die unterschiedliche Aktivierung der Drehachsen, wodurch eine Verdrehung der Bordwand auftritt. Darüber hinaus führt diese Verdrehung der Bordwand sowohl zu einem erhöhten Kraftaufwand beim Öffnen und Schliessen der Bordwand aufgrund von Verspannungen in den Scharnieren als auch zu unkontrollierten Aufprallbewegungen der Scharniere an den Schwenkbegrenzungsanschlägen, was wiederum Beschädigungen an den Scharnierteilen oder umliegenden Komponenten verursachen kann.

Ein weiteres zwangsgesteuertes Scharnier mit zwei Drehachsen ist aus DE 1982305 A1 bekannt. Bei dieser Ausführung wird eine definierte Schwenkfolge durch ein linear verschiebbares Sperrglied mit zwei Kurvenbahnen erzielt. Zwar ermöglicht dieses Prinzip eine abgestimmte Blockierung der jeweiligen Drehachsen, jedoch ist der Öffnungszeitpunkt beider Achsen nicht unabhängig voneinander steuerbar. Darüber hinaus erfordert dieser Mechanismus eine besonders präzise Fertigung und kann bei Verschmutzung oder Toleranzabweichungen zu Störungen führen. Insbesondere ist eine derartige Lösung für Bordwandscharniere an Nutzfahrzeugen aufgrund des begrenzten zur Verfügung stehenden Bauraums in der Praxis nicht zuverlässig realisierbar.

Aufgabe der vorliegenden Erfindung ist es, ein Doppelgelenk-Scharnier dahingehend weiterzuentwickeln, dass eine zuverlässige Steuerung der Drehachsen gewährleistet ist, um Funktionsstörungen sowie daraus resultierende Beschädigungen an der Bordwand, dem Aussenrahmen oder den Scharnierteilen zu vermeiden.

Die Aufgabe wird durch die Merkmale des Patentanspruchs 1 gelöst. Vorteilhafte Weiterbildungen ergeben sich aus den abhängigen Patentansprüchen.

Die Erfindung bietet den wesentlichen Vorteil, dass durch die beiden Kurvengetriebe eine sequenzielle, zwangsgesteuerte Schwenkbewegung der Scharnierteile erreicht wird. Dabei ist in einer ersten Schwenkphase ausschliesslich die fahrgestellnahe Drehachse freigegeben, während die bordwandnahe Drehachse formschlüssig blockiert bleibt. Erst nach Erreichen eines bestimmten Schwenkwinkels, vorzugsweise etwa 90°, erfolgt die Freigabe der bordwandnahen Drehachse bei gleichzeitiger Blockierung der fahrgestellnahen Drehachse. Dadurch wird eine eindeutig definierte und störungssichere Bewegungsabfolge beim Ab- und Hochklappen der Bordwand gewährleistet.

Im Gegensatz zu herkömmlichen Doppelgelenk-Scharnieren, bei denen durch Toleranzen, Verschmutzungen oder asymmetrische Kraftübertragung unkontrollierte Bewegungsabläufe auftreten können, sorgt die erfindungsgemässe Kinematik für eine zuverlässige Funktion auch unter ungünstigen Einsatzbedingungen.

Durch die definierte Bewegungsfolge kann die Bordwand vollständig um etwa 180° nach unten geschwenkt werden, ohne mit seitlich herausragenden Bauteilen wie Kotflügeln oder Reifen zu kollidieren, selbst bei maximal ausgenutzter gesetzlicher Fahrzeugbreite. Dies verbessert die Zugänglichkeit der Ladefläche erheblich.

Die Kurvengetriebe sind vorzugsweise jeweils als dreiteiliges System ausgeführt, bestehend aus einem fahrgestellseitig starr verbundenen Kurvenelement, einem bordwandseitig starr verbundenen Kurvenelement sowie einem dazwischen beweglich angeordneten Kurvenelement. Diese Kurvenelemente treten über gekrümmte Steuerflächen miteinander in Kontakt, deren Geometrie eine gezielte winkelabhängige Steuerung der Freigabe und Blockierung der jeweiligen Drehachse ermöglicht. Zugleich erfolgt die Blockierung formschlüssig über die Anlage der Kurvenelemente, was insgesamt zu einer mechanisch robusten, präzisen und wartungsarmen Steuerung führt.

Die vorzugsweise in Plattenbauweise ausgeführte Gestaltung des Gelenkstücks erlaubt eine kompakte, montagefreundliche und bauraumoptimierte Anordnung. Die symmetrische oder gleichartige Ausbildung der Kurvengetriebe sowie der Scharnierteile vereinfacht die Fertigung und Montage.

Darüber hinaus sind Anschlagelemente am Gelenkstück vorgesehen, die die Schwenkbewegung mechanisch in den Endlagen begrenzen, ohne dass die Kurvengetriebe als Anschlag dienen müssen. Zugleich erfolgen die Anschlagsfunktionen stets unter den Komponenten des Scharniers und der Bordwand, wodurch hohe Belastungen und Verschleiss am Fahrgestell verhindert wird.

Die Verwendung eines hochfesten, korrosionsbeständigen Edelstahls für das Scharnier erhöht die Lebensdauer auch bei hoher Beanspruchung und widrigen Umgebungsbedingungen.

Zur weiteren Erleichterung der Montage kann mindestens eines der Scharnierteile mit geschlitzten Montagebohrungen ausgebildet sein. Zudem schützt eine optional vorgesehene Abdeckung die Kurvengetriebe zuverlässig vor Schmutz und Beschädigungen durch äussere Einflüsse, wie sie im Nutzfahrzeugeinsatz regelmässig auftreten.

Die Erfindung wird anhand eines Ausführungsbeispiels, welches in den Zeichnungen dargestellt ist, näher erläutert. Es zeigt:
Fig. 1: Vertikalschnitt durch ein Pritschenfahrzeug im Bereich der Hinterachse mit einem Doppelgelenk-Scharnier, das am Fahrgestell und an der beweglichen Bordwand befestigt ist, wobei sich die Bordwand in ihrer geschlossenen Endstellung befindet.
Fig. 2: Darstellung des Doppelgelenk-Scharniers gemäss Fig. 1 in vergrösserter Darstellung, gezeigt in der geschlossenen Endstellung sowie alternativ in der vollständig geöffneten, um 180° nach unten abgeklappten Endstellung der Bordwand.
Fig. 3: Seitenansicht des Doppelgelenk-Scharniers gemäss Fig. 2 in geschlossener Stellung.
Fig. 4: Darstellung des Doppelgelenk-Scharniers gemäss Fig. 2 und 3 mit fahrgestellseitigem Scharnierteil in Ausführung mit geschlitzten Montagebohrungen zur erleichterten Befestigung.
Fig. 5: Vertikalschnitt durch das Doppelgelenk-Scharnier im Bereich einer Gelenkstückplatte in der geschlossenen Endstellung bei 0° sowie alternativ in geöffneter Stellung bei 90° und 180°.
Fig. 6: Vertikalschnitt durch das Doppelgelenk-Scharnier im Bereich des Kurvengetriebes zur Blockierung der bordwandnahen Drehachse in der geschlossenen Endstellung bei 0°.
Fig. 7: Vertikalschnitt durch das Doppelgelenk-Scharnier im Bereich des Kurvengetriebes zur Blockierung der bordwandnahen Drehachse in der geöffneten Stellung bei 90°.
Fig. 8: Vertikalschnitt durch das Doppelgelenk-Scharnier im Bereich des Kurvengetriebes zur Blockierung der bordwandnahen Drehachse in der geöffneten Endstellung bei 180°.
Fig. 9: Vertikalschnitt durch das Doppelgelenk-Scharnier im Bereich des Kurvengetriebes zur Blockierung der fahrgestellnahen Drehachse in der geschlossenen Endstellung bei 0°.
Fig. 10: Vertikalschnitt durch das Doppelgelenk-Scharnier im Bereich des Kurvengetriebes zur Blockierung der fahrgestellnahen Drehachse in der geöffneten Stellung bei 90°.
Fig. 11: Vertikalschnitt durch das Doppelgelenk-Scharnier im Bereich des Kurvengetriebes zur Blockierung der fahrgestellnahen Drehachse in der geöffneten Endstellung bei 180°.

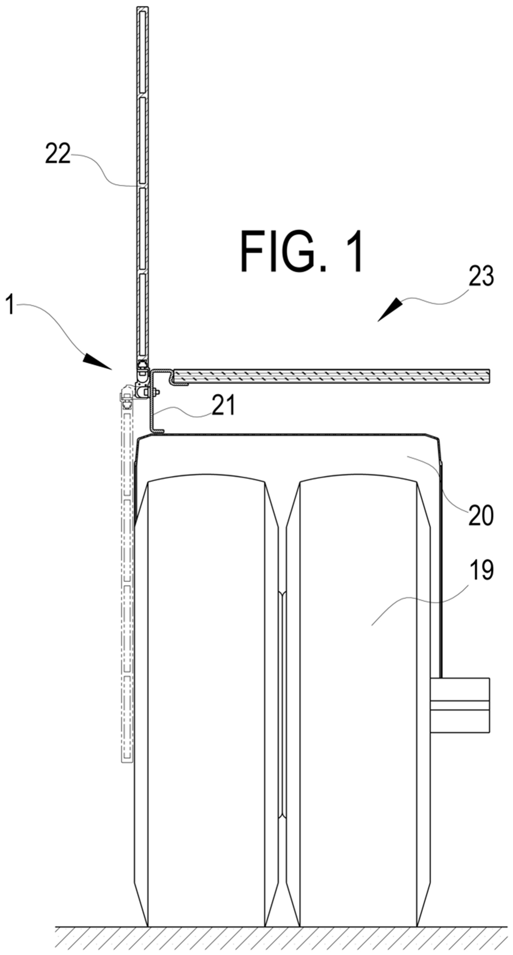

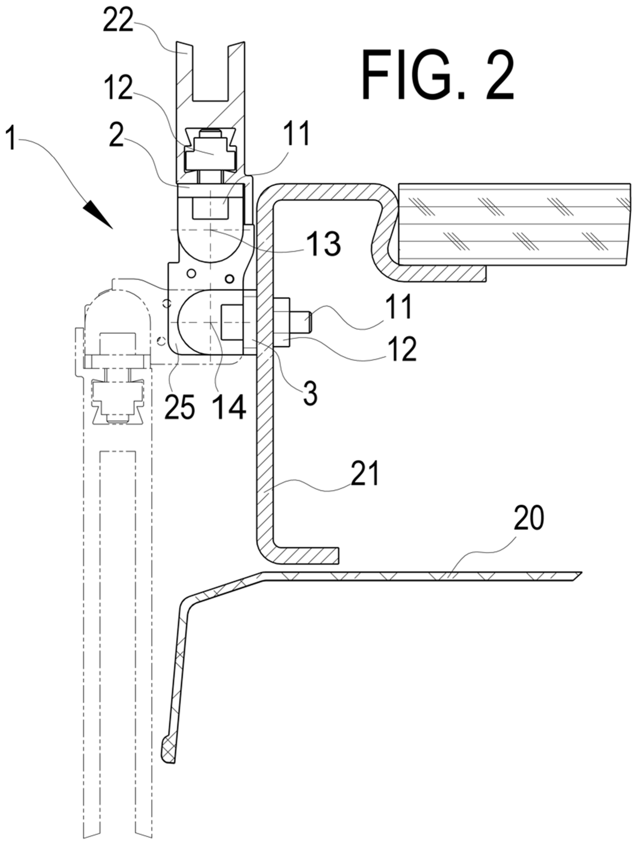

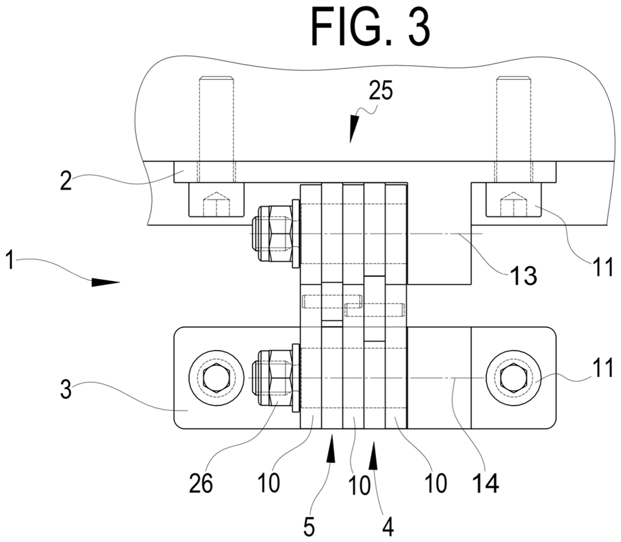

In Fig. 1 zeigt ein schematischer Vertikalschnitt eines Nutzfahrzeuges mit Pritschenaufbau im Bereich der Hinterachsen. Dargestellt ist die Doppelbereifung 19 der Hinterachse, die sich innerhalb der gesetzlich zulässigen Maximalbreite befindet. In diesem Bauraum ist das erfindungsgemässe Doppelgelenk-Scharnier 1 angeordnet. Oberhalb der Hinterachse sind ein Kotflügel 20 sowie ein fahrgestellfester Aussenrahmen 21 dargestellt, der die horizontale Ladefläche 23 begrenzt. Die an diesem Fahrgestell 21 angelenkten Bordwand 22 ist über das Scharnier 1 beweglich angebunden, wobei sich die Bordwand in der geschlossener Endstellung befindet. Einzelheiten zur Ausgestaltung des Scharniers sind in Fig. 2 bis 10 veranschaulicht.

Die wesentlichen Bestandteile des Scharniers 1 sind in den Fig. 2 bis 4 dargestellt. Das Scharnier 1 umfasst im Wesentlichen ein fahrgestellfestes Scharnierteil 3 mit einer Drehachse 14, ein bordwandfestes Scharnierteil 2 mit einer zweiten Drehachse 13 sowie ein Gelenkstück 25, das an beiden Drehachsen 13 und 14 angelenkt ist. Das Gelenkstück 25 ist in Plattenbauweise ausgeführt und besteht aus drei Gelenkstückplatten 10, die jeweils an den beiden Drehachsen 13, 14 angelenkt sind und zwei dazwischen angeordneten Kurvengetriebe 4, 5 aufnehmen. Die Gelenkstückplatten 10 dienen zugleich als Träger und Führungsstruktur für die Kurvengetriebe 4, 5. Die Axialarretierung des Gelenkstück 25 an den Drehachsen 13, 14 erfolgt jeweils mittels einer Mutter 26. Die Befestigung der Scharnierteile 2, 3 am Fahrgestell 21 bzw. an der Bordwand 22 erfolgt mit Gewindeplatten 12 und Zylinderkopfschrauben 11.

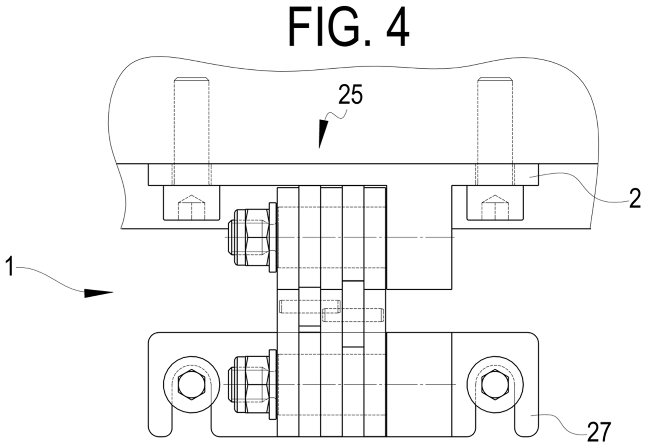

Gemäss Fig. 4 kann ein Scharnierteil mit Durchgangsbohrungen 3 durch ein Scharnierteil mit geschlitzte Montagebohrungen 27 ersetzt werden. Dies ermöglicht eine vereinfachte Montage, indem die Bordwand über eine vormontierte Schraubverbindung eingehängt werden kann.

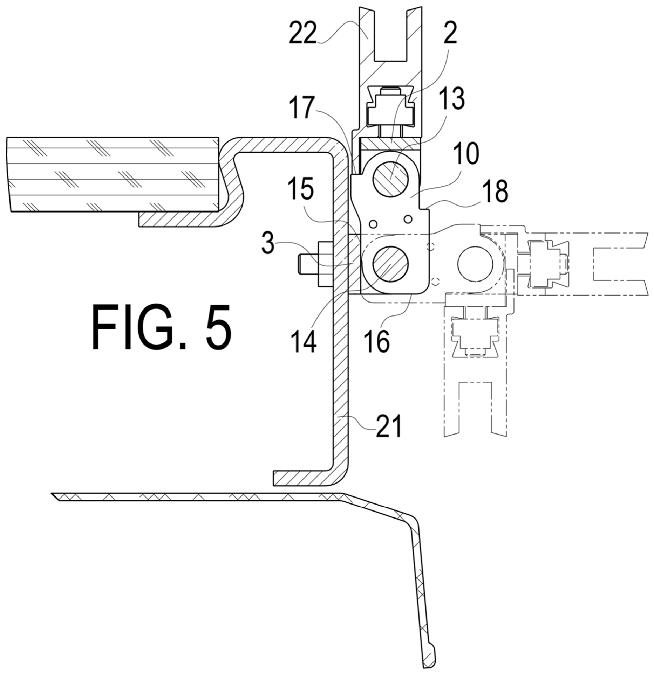

Gemäss Fig. 5 erfolgt die Schwenkbegrenzung über definierte Anschlagflächen. Die Schwenkbegrenzung der fahrgestellnahen Drehachse 14 in der 0°-Stellung wird durch die Anlage der Anschlagfläche 15 des Gelenkstückplatten 10 am Scharnierteil 3 realisiert. In der 90°-Stellung erfolgt die Schwenkbegrenzung über eine entsprechend angrenzende Anschlagfläche 16. Die Schwenkbegrenzung der bordwandnahmen Drehachse 13 erfolgt zwischen 0° und 90° über die Anschlagfläche 17 zwischen Gelenkstückplatte 10 und Bordwand 22. In der 180°-Stellung erfolgt die Begrenzung über die Anschlagfläche 18 zwischen Gelenkstückplatte 10 und Scharnierteil 2. Die vorzugsweise eingesetzten Anschlagflächen bestehen aus korrosionsbeständigem Edelstahl, wodurch Beschädigungen durch unsachgemässe Bedienung oder hohe Flächenpressungen keine korrosiven Folgeschäden verursachen und die Funktionsfähigkeit auch unter rauen Einsatzbedingungen langfristig erhalten bleibt.

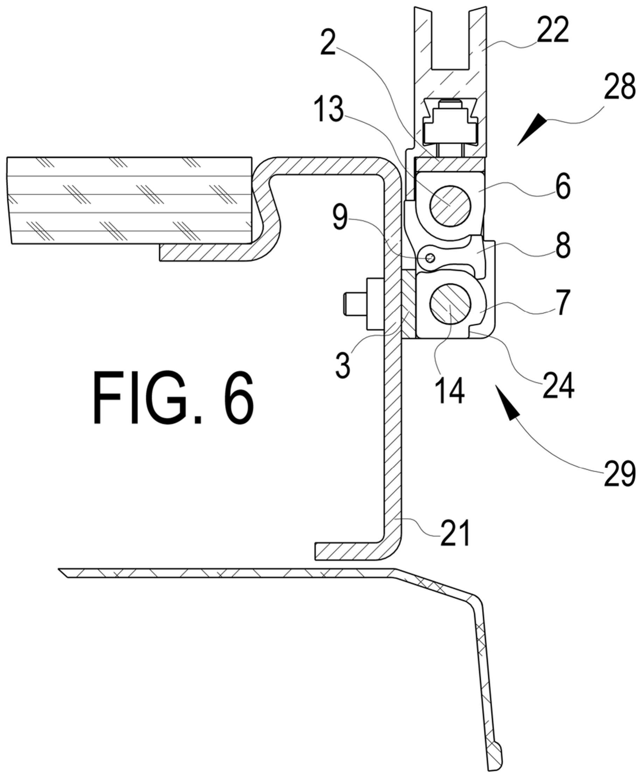

Die vorzugsweise dreiteiligen Kurvengetriebe 6, 7, 8 sind in den Fig. 6 bis 11 jeweils in einem Vertikalschnitt dargestellt. Jedes Kurvengetriebe umfasst ein erstes Kurvenelement 6 bzw. 7, das starr mit dem bordwandfesten Scharnierteil 2 verbunden ist, ein zweites Kurvenelement 6 bzw. 7, das starr mit dem fahrgestellfesten Scharnierteil 3 verbunden ist, sowie ein dazwischen angeordnetes, bewegliches Kurvenelement 8. In einer vorteilhaften Ausführungsform sind die Kurvenelemente 6, 7, 8 beider Kurvengetriebe 4, 5 geometrisch identisch ausgebildet, jedoch funktional gespiegelt angeordnet, sodass Kurvenelement 6 bei einem Kurvengetriebe die bordwandnahe Position 28 einnimmt und beim gegenüberliegenden Kurvengetriebe die fahrgestellnahe Position 29. Analog dazu wechselt Kurvenelement 7 seine Position spiegelbildlich. Das bewegliche Kurvenelement 8 ist über einen eingepressten Stift 9 gelenkig zwischen den benachbarten Gelenkstückplatten 10 gelagert.

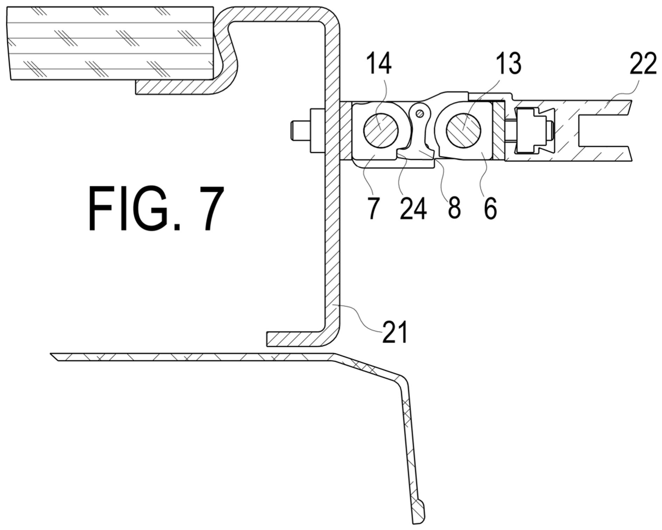

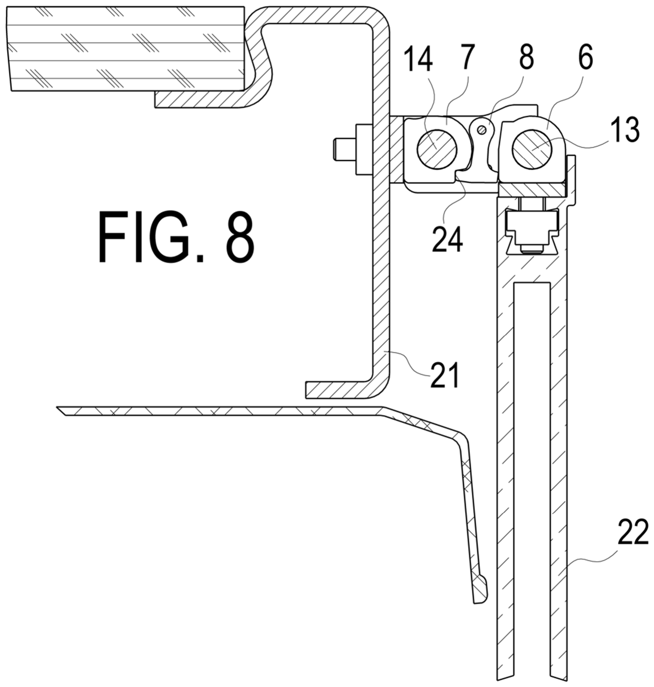

In den Fig. 6 bis 8 wird das Abklappen der Bordwand 22 anhand eines Vertikalschnitts durch das Kurvengetriebe 4 dargestellt, dass der Blockierung und Freigeben der bordwandnahen Drehachse 13 dient. In der hochgeklappten Endstellung bei 0° gemäss Fig. 6 liegen die drei Kurvenelemente 6, 7, 8 formschlüssig aneinander an, wodurch eine Rotation um bordwandnahe Drehachse 13 zuverlässig verhindert wird. Beim Erreichen eines Schwenkwinkels von etwa 90° gem. Fig. 7 tritt das bewegliche Kurvenelement 8 in eine Kerbe 24 des Kurvenelements 7 ein, wodurch das bordwandfeste Scharnierteil 2 mit dem zugehörigen Kurvenelement 6 um die bordwandnahe Drehachse 13 rotieren kann. Fig. 8 zeigt die Lage der Kurvenelemente 6, 7, 8 in der vollständig abgeklappten Endstellung der Bordwand bei 180°.

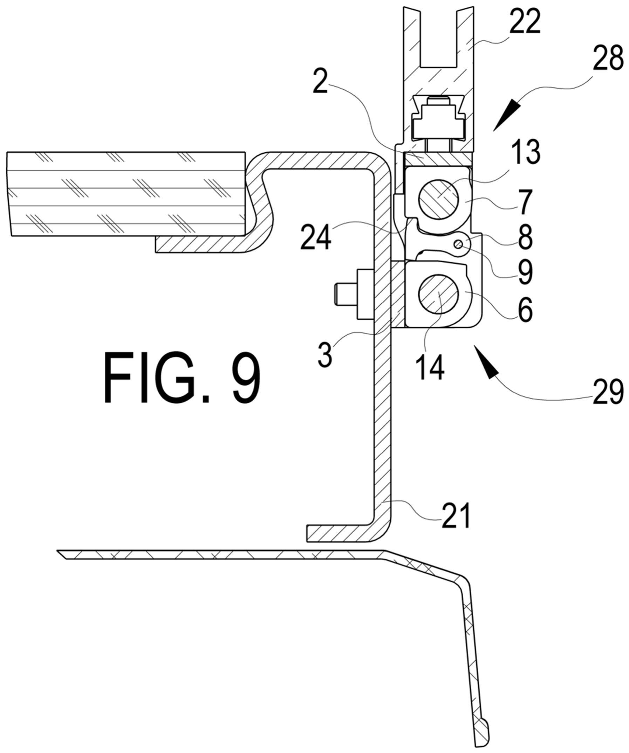

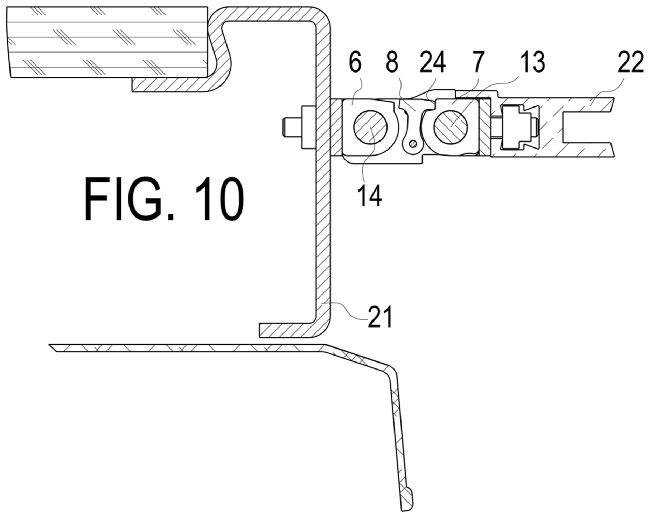

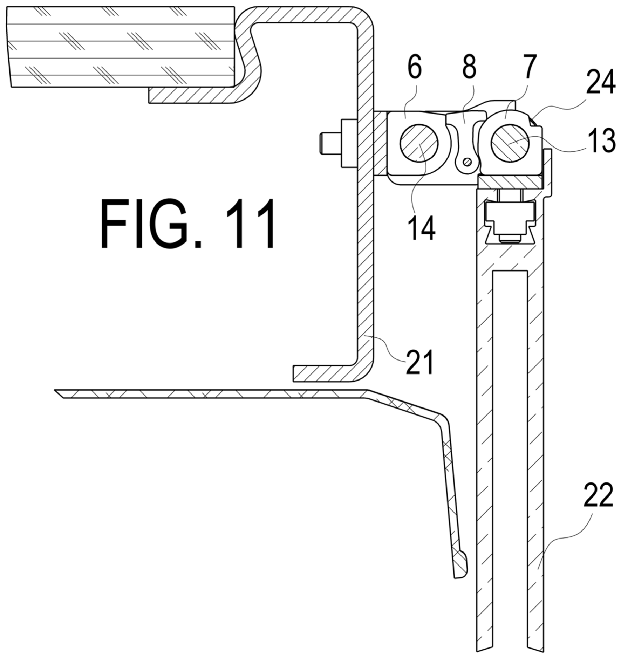

In den Fig. 9 bis 11 ist das Abklappen der Bordwand 22 anhand eines Vertikalschnitts durch das Kurvengetriebe 5 dargestellt, welches der Blockierung und Freigabe der fahrgestellnahen Drehachse 14 dient. In der hochgeklappten Endstellung bei 0° bis zum Erreichen eines Schwenkwinkels von etwa 90° gemäss Fig. 9 befinden sich die Kurvenelemente 6, 7, 8 außer Eingriff, sodass eine freie Rotation um die fahrgestellnahe Drehachse 14 möglich ist. Überschreitet der Schwenkwinkel etwa 90°, tritt das bewegliche Kurvenelement 8 gemäss Fig. 10 in eine Kerbe 24 des starr mit dem fahrgestellfesten Scharnierteil 3 verbundenen Kurvenelements 7 ein. In der vollständig abgeklappten Endstellung bei 180° gemäss Fig. 11 sind die Kurvenelemente 6, 7, 8 in formschlüssigem Kontakt, wodurch die fahrgestellnahe Drehachse 14 blockiert wird. Diese Sperrfunktion verhindert insbesondere beim Hochklappen ein unbeabsichtigtes Rotieren um die fahrgestellnahe Drehachse 14 infolge von Verschmutzungen oder ungleichmässiger Krafteinleitung. Der Hochklappvorgang erfolgt in umgekehrter Reihenfolge.

Zur Erhöhung der Betriebssicherheit und Lebensdauer kann das Gelenkstück 25 zusätzlich mit einer Schutzabdeckung versehen sein, welche das Eindringen von Schmutz, Feuchtigkeit oder mechanischen Fremdkörpern verhindert. Die Schutzabdeckung umschliesst dabei vorzugsweise das gesamte Gelenkstück 25, ohne die Beweglichkeit des Scharniers zu beeinträchtigen. Dadurch wird die Funktionsfähigkeit der Kurvenelemente 6, 7, 8 auch unter erschwerten Umgebungsbedingungen, wie sie typischerweise im Nutzfahrzeugeinsatz auftreten, zuverlässig aufrechterhalten. Die Schutzabdeckung kann beispielsweise aus einem metallischen, elastomeren oder thermoplastischen Material bestehen und lösbar oder dauerhaft mit dem Gelenkstück verbunden sein.

## Patentansprüche

1. Scharnier zum Herunterklappen einer Bordwand eines Nutzfahrzeugs um etwa 180°, mit einem ersten, fahrgestellfesten Scharnierteil und einem zweiten, bordwandfesten Scharnierteil, die jeweils eine parallel zueinander angeordnete Drehachse aufweisen, an denen ein Gelenkstück angelenkt ist, das für jede Drehachse eine Schwenkbewegung von etwa 90° erlaubt, **dadurch gekennzeichnet, dass** das Gelenkstück zwei Kurvengetriebe aufweist, von denen jedes so ausgebildet ist, dass es über eine Mehrzahl von Kurvenelementen mit gekrümmten Steuerflächen die Schwenkbewegung der beiden Scharnierteile derart steuert, dass während einer ersten und einer zweiten Schwenkbewegung von jeweils etwa 90° jeweils nur eine der beiden Drehachsen schwenkbar ist, während die jeweils andere Drehachse blockiert ist.

2. Scharnier nach Anspruch 1, **dadurch gekennzeichnet, dass** jedes Kurvengetriebe vorzugsweise drei Kurvenelemente umfasst: ein erstes Kurvenelement, das starr mit dem fahrgestellfesten Scharnierteil verbunden ist, ein zweites Kurvenelement, das starr mit dem bordwandfesten Scharnierteil verbunden ist, und ein dazwischen angeordnetes bewegliches Kurvenelement, wobei die Kurvenelemente gekrümmte Steuerflächen aufweisen, durch deren Form eine winkelabhängige Steuerung der Freigabe und Blockierung der jeweiligen Drehachsen bewirkt wird.

3. Scharnier nach einem der Ansprüche 1 bis 2, **dadurch gekennzeichnet, dass** die Blockierung der jeweils inaktiven Drehachse durch formschlüssige Anlage der Kurvenelemente erfolgt.

4. Scharnier nach einem der Ansprüche 1 bis 3, **dadurch gekennzeichnet, dass** in der ersten Schwenkphase von etwa 0° bis 90° bei Abklappen der Bordwand ausschliesslich die fahrgestellnahe Drehachse aktiv ist und in der zweiten Schwenkphase von etwa 90° bis 180° ausschliesslich die bordwandnahe Drehachse aktiv ist.

5. Scharnier nach einem der Ansprüche 1 bis 4, **dadurch gekennzeichnet, dass** das Gelenkstück mit Anschlagsflächen versehen ist, die zur Begrenzung der Schwenkbewegung in den Endpositionen ausgebildet sind und an die Scharnierteile sowie das Bordwandprofil anschlagen.

6. Scharnier nach einem der Ansprüche 1 bis 5, **dadurch gekennzeichnet, dass** die beiden Kurvengetriebe im wesentlichen gleich ausgebildet sind.

7. Scharnier nach einem der Ansprüche 1 bis 6, **dadurch gekennzeichnet, dass** das erste und zweite Scharnierteil mit Drehachse im wesentlichen gleich ausgebildet sind.

8. Scharnier nach einem der Ansprüche 1 bis 7, **dadurch gekennzeichnet, dass** das Gelenkstück mit den Gelenkstückplatten und den Kurvengetrieben in einer zueinander parallel angeordneten Plattenbauweise ausgebildet ist, wobei diese Bauweise eine kompakte und platzsparende Anordnung der einzelnen Bauteile ermöglicht.

9. Scharnier nach einem der Ansprüche 1 bis 8, **dadurch gekennzeichnet, dass** die Scharnierteile und das Gelenkstück aus einem hochfesten, korrosionsbeständigen Edelstahl gefertigt sind.

10. Scharnier nach einem der Ansprüche 1 bis 9, **dadurch gekennzeichnet, dass** mindestens eines der Scharnierteile mit geschlitzten Montagebohrungen versehen ist, um eine schnellere und vereinfachte Montage zu ermöglichen.

11. Scharnier nach einem der Ansprüche 1 bis 10, **dadurch gekennzeichnet, dass** eine Schutzabdeckung um die Gelenkstücke das Eindringen von Schmutz verhindert und die Funktionsfähigkeit des Kurvengetriebes schützt.
